Europäisches Patentamt

European Patent Office

Office européen des brevets

(19)

(11) **EP 0 762 238 A1**

(12) **EUROPÄISCHE PATENTANMELDUNG**

(43) Veröffentlichungstag:
    **12.03.1997 Patentblatt 1997/11**

(51) Int. Cl.⁶: **G03H 1/04**, G03H 1/02,
    B42D 15/10, G06K 19/16

(21) Anmeldenummer: 96107332.7

(22) Anmeldetag: **09.05.1996**

(84) Benannte Vertragsstaaten:
    **AT BE CH DE DK ES FI FR GB IE IT LI NL SE**
    Benannte Erstreckungsstaaten:
    **SI**

(30) Priorität: **21.08.1995 EP 95810522**

(71) Anmelder: **Landis & Gyr Technology Innovation
    AG
    6301 Zug (CH)**

(72) Erfinder:
    • **Staub, René
      6330 Cham (CH)**
    • **Tompkin, Wayne Robert
      5400 Ennetbaden (CH)**

(54) **Informationsträger mit Beugungsstrukturen**

(57)    Ein Informationsträger (2) weist wenigstens ein Beugungsmuster auf, das aus mikroskopisch feinen Reliefstrukturen (9) gebildet ist und das bei Beleuchtung mit kohärentem Licht (10) in zwei räumlich getrennten Richtungen ein erstes und ein zweites Bild eines Objektes erzeugt. Die Bilder können auf einem Schirm sichtbar gemacht oder mittels Photodetektoren analysiert werden. Die beiden Bilder weisen lichtstarke und/oder vergleichsweise lichtschwache Bildpunkte auf und beinhalten eine Symmetrie, indem einem lichtstarken Bildpunkt des ersten Bildes ein lichtschwacher Bildpunkt des zweiten Bildes und umgekehrt zugeordnet werden kann.

    Solche Informationsträger (2) eignen sich als Sicherheitselemente für Dokumente aller Art, wie z.B. Banknoten, Pässe, Ausweise, Kreditkarten, etc., wobei wenigstens ein Teil der Sicherheitsinformation unter inkohärenten Beleuchtungsverhältnissen nicht sichtbar ist.

Fig.1

EP 0 762 238 A1

## Beschreibung

Die Erfindung betrifft einen Informationsträger mit Beugungsstrukturen der im Oberbegriff des Anspruchs 1 genannten Art.

Solche Informationsträger eignen sich vorzugsweise zur Verwendung als Sicherheitselemente für Dokumente aller Art, da sie mit Informationen versehen sind, die nur bei Beleuchtung mit kohärentem Licht von Auge oder von Photodetektoren zu erkennen sind.

Bei Fourier-, Fresnel- und Fraunhofer-Hologrammen ist das holografisch gespeicherte Objekt unter normalen, d.h. weitgehend inkohärenten, Beleuchtungsverhältnissen nicht sichtbar. Das Objekt kann jedoch bei Beleuchtung des Hologramms mit kohärentem Licht als reelles oder als virtuelles Bild rekonstruiert werden. Bei Weisslicht-Hologrammen wie z.B. Rainbow-Hologrammen oder bei bestimmten Volumen-Hologrammen hingegen ist das gespeicherte Objekt auch unter normalen Beleuchtungsverhältnissen erkennbar. Einen Überblick über das Gebiet der Holografie gibt das Buch "Handbook of Optical Holography", das vom Verlag Academic Press, Inc. im Jahre 1979 herausgegeben wurde.

Aus der DE-OS 42 37 415 ist ein Informationsträger mit einem Fourier-Transformationshologramm bekannt, das bei Beleuchtung mit einem Laserstrahl ein Bild eines holografisch aufgenommenen, zweidimensionalen Objektes erzeugt, das auf einem entsprechend angeordneten Schirm sichtbar gemacht werden kann. Zur Erzeugung eines sichtbaren Bildes des Objektes auf dem Schirm genügt es, wenn der Laserstrahl nur eine kleine Teilfläche des Hologramms beleuchtet. Fourier-Hologramme haben nämlich die vorteilhaften Eigenschaften, dass das auf diese Weise rekonstruierte Bild unabhängig von Translationen des Informationsträgers ist und auch eine grosse Tiefenschärfe aufweist. Aus dem Abschnitt über Fourierholografie des oben zitierten Fachbuches ist es bekannt, dass bei der Rekonstruktion nicht ein einziges, direktes Bild des Objektes, sondern auch ein zweites, konjugiertes Bild erzeugt wird. Bei senkrechter Beleuchtungsrichtung sind die beiden Bilder punktsymmetrisch zur Achse des Laserstrahles angeordnet und von gleicher Helligkeit.

Ein Beispiel der bei kohärenter Beleuchtung von einem Fourierhologramm erzeugten beiden Bilder eines das Wort "CSIRO" darstellenden Objektes ist im Buch "Optical Holography" von P. Hariharan der Reihe "Cambridge Studies in Modern Optics: 2" des Verlages Cambridge University Press (ISBN 0 521 31163 2) fotografisch abgebildet.

Die Kombination eines Fourierhologramms und eines unter normalen Beleuchtungsverhältnissen sichtbaren Hologramms ist bekannt von der Eurocheckkarte, bei der bei Beleuchtung mit kohärentem Licht, z.B. mit einem Laser, die Buchstaben "ABNH" auf einem Schirm sichtbar gemacht werden können.

Fourier-Hologramme lassen sich z.B. als mikroskopisch feine Reliefstrukturen, auch Oberflächenreliefs genannt, realisieren, so dass sie durch Prägen in eine thermoplastische Schicht oder Abformen in eine UV-härtbare Schicht auf kostengünstige Weise vervielfältigbar sind. Bei der Beleuchtung mit einem sichtbares Licht emittierenden Laser sind auf einem entsprechend angeordneten Schirm zwei Bilder des Objektes in gleicher Helligkeit sichtbar.

Anstelle der Fourierholografie können auch computergenerierte Hologramme zur Erzeugung eines vorbestimmten Bildes verwendet werden. Geeignet ist insbesondere das Kinoform, das als Oberflächenrelief herstellbar ist.

Der Erfindung liegt die Aufgabe zugrunde, einen Informationsträger vorzuschlagen, der bei kohärenter Beleuchtung ein Bild erzeugt, das auf einem Schirm sichtbar gemacht und/oder mit geeignet angeordneten Photodetektoren bezüglich seiner Intensitätsverteilung überprüft werden kann und das mit holografischen Techniken weder nachahmbar noch kopierbar ist.

Die Erfindung besteht in den im Anspruch 1 angegebenen Merkmalen. Vorteilhafte Ausgestaltungen ergeben sich aus den abhängigen Ansprüchen.

Die Lösung der Aufgabe basiert aufder Idee, eine den Hologrammen inhärente Eigenschaft, nämlich bei der Beleuchtung des Hologramms mit einer kohärenten Lichtwelle die Erzeugung eines direkten und eines konjugierten Bildes eines Objektes, die den gleichen Bildinhalt wiedergeben und in etwa gleich hell sind, zu vermeiden oder wenigstens zu erreichen, dass die beiden Bilder unterschiedlich lichtstark sind. Die Lösung gelingt, indem bei einem Informationsträger Beugungssttukturen zur Erzeugung des Bildes eines Objektes derart ausgebildet werden, dass sie auftreffendes kohärentes Licht in Teilstrahlen unterschiedlicher Intensität auffächern. Für diesen Zweck sind insbesondere Beugungsstrukturen mit asymmetrischer Profilform geeignet.

Für eine Verwendung des Informationsträgers als Sicherheitselement mit einer hohen Sicherheit gegen Nachahmung ist es nun erstens bevorzugt, eine Einrichtung zur Überprüfung des Sicherheitselementes derart auszubilden, dass das direkte und das konjugierte Bild eines einzigen Objektes gleichzeitig, jedoch in unterschiedlicher Helligkeit, auf einem Betrachtungsschirm nebeneinander sichtbar sind. Zweitens ist es bevorzugt, die Beugungsstrukturen des Informationsträgers so zu gestalten, dass in ihrer Struktur zwei verschiedene Objekte gespeichert sind. Bei der Rekonstruktion überlappt das direkte Bild des ersten Objektes mit dem konjugierten Bild des zweiten Objektes und umgekehrt. Da die direkten Bilder wesentlich heller als die konjugierten Bilder sind, sind die direkten Bilder von einem menschlichen Betrachter gut erkennbar. Bei einer holografisch erzeugten oder nachgemachten Fälschung sind die direkten und die konjugierten Bilder der beiden Objekte annähernd gleich hell, so dass erstens die Bilder auf dem Schirm mehr oder weniger nur mehr als helle und dunkle, verschmierte Flecken wahrgenommen werden können und dass zweitens beide Bilder etwa gleich aussehen.

Nachfolgend werden Ausführungsbeispiele der Erfindung anhand der Zeichnung näher erläutert.

Es zeigen:

Fig. 1    einen als Schichtverbund ausgebildeten Informationsträger mit Beugungsstrukturen im Querschnitt,

Fig. 2    ein mit dem Informationsträger versehenes Dokument in der Draufsicht,

Fig. 3a, b    Bilder von Beugungsmustern,

Fig. 4a - c    Bilder von sägezahnförmigen Beugungsgittern,

Fig. 5    mit Beugungsstrukturen erzeugbare Muster,

Fig. 6    weitere mit Beugungsstrukturen erzeugbare Muster,

Fig. 7    Bilder mit Schriftzügen,

Fig. 8    eine Einrichtung zur visuellen Überprüfung von im Informationsträger versteckter Information, und

Fig. 9    eine Einrichtung zur maschinellen Überprüfung von im Informationsträger versteckter Information.

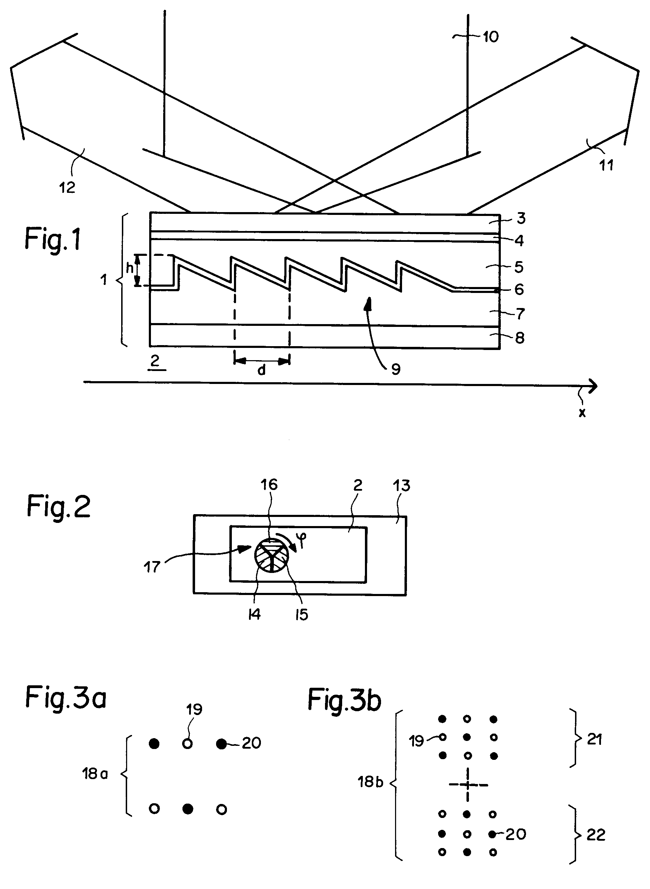

Die Fig. 1 zeigt in nicht massstäblicher Zeichnung einen als Schichtverbund 1 ausgebildeten Informationsträger 2. Der Schichtverbund 1 weist eine Trägerfolie 3 auf, auf die in der angegebenen Reihenfolge eine Zwischenschicht 4, eine erste Lackschicht 5, eine Reflexionsschicht 6, eine zweite Lackschicht 7 und eine Kleberschicht 8 aufgebracht sind. In die beiden Lackschichten 5, 7 sind Beugungstrukturen 9 eingebettet. Die Beugungstrukturen 9 sind mikroskopisch feine Reliefstrukturen, die z.B. als Gitterstrukturen verwirklicht sind, deren geometrische Parameter Linienabstand, Orientierung und Profilform örtlich in einer vorbestimmten Art und Weise variieren. Die in der Fig. 1 gezeichnete Beugungsstruktur 9 ist ein eindimensionales, entlang einer x-Achse ausgerichtetes Gitter mit einer asymmetrischen, sägezahnförmigen Profilform. Das Gitter 9 ist charakterisiert durch den Linienabstand d und die Profilhöhe h. Das Gitter 9 beugt und reflektiert einen Teil eines auftreffenden Laserstrahls 10 als Teilstrahl 11 in die positive erste Beugungsordnung und einen weiteren Teil als Teilstrahl 12 in die negative erste Beugungsordnung. Ein weiterer Anteil des Laserstrahles 10 wird in die nullte Beugungsordnung zurückreflektiert. Das Licht des Laserstrahles 10 ist monochromatisches, kohärentes Licht der Wellenlänge λ. Der Linienabstand d ist so gewählt, dass wegen der Beziehung

$$\sin\theta_n = \frac{n \ast \lambda}{d} \, ,$$

wobei n eine ganze Zahl und $\theta_n$ den Winkel des n-ten Beugungsmaximums bedeutet, nur Beugungsmaxima für n = 1 und n = -1 auftreten. Dank der asymmetrischen Profilform des Gitters 9 ist die Intensität des Teilstrahles 11 grösser als die Intensität des Teilstrahles 12. Die Parameter d und h des sägezahnförmigen Gitters 9 sind dabei vorzugsweise so gewählt, dass der Teilstrahl 11 um wenigstens einen Faktor zwei lichtstärker als der Teilstrahl 12 ist. Mit sägezahnförmigen Profilen lassen sich jedoch auch bei der Massenfertigung Intensitätsverhältnisse der beiden Teilstrahlen 11, 12 von 10:1 verwirklichen, die von Auge leicht als unterschiedlich hell wahrnehmbar sind.

Die Beugungsstrukturen 9 werden beispielsweise mittels einer geheizten Prägematrize als mikroskopisch feine Reliefstrukturen in die Lackschicht 5 eingeprägt, wobei die Lackschicht 5 in diesem Fall aus thermoplastischem Werkstoff besteht. Ein solches Prägeverfahren ist z.B. aus der schweizerischen Patentschrift 661 683 bekannt. Bei einem weiteren Verfahren, wie es aus den US-amerikanischen Patentschriften 4 758 296 und 4 840 757 bekannt ist, werden die Beugungsstrukturen 9 durch Abformen in die Lackschicht 5 eingebracht, wobei die Lackschicht 5 aus UV-härtbarem Lack besteht. Als Material für die Reflexionsschicht 6 dienen Metalle, z.B. Aluminium, oder Dielektrika mit einem Brechungsindex, der sich deutlich vom Brechungsindex der beiden Lackschichten 5, 7 unterscheidet.

In Abhängigkeit von den optischen Eigenschaften und der Dicke der Reflexionsschicht 6 sowie den optischen Eigenschaften der beiden Lackschichten 5, 7 treten die Teilstrahlen 11, 12 in Reflexion und/oder Transmission auf.

Das Relief der Beugungsstrukturen 9 weist eine typische Profilhöhe auf, die im Bereich von etwa 0.1 bis 1.5 Mikrometer liegt, während der Linienabstand der Beugungsstrukturen 9 etwa 0.1 bis 10 Mikrometer beträgt. Ein Auftrag der zweiten Lackschicht 7 von etwa 0.15 bis 1.5 Mikrometer Dicke (z.B. 1 Mikrometer) ebnet das Relief völlig ein. Mit Vorteil wird für beide Lackschichten 5 und 7 das gleiche Material verwendet, beispielsweise ein thermoplastischer Acrylpolymerlack. Die zweite Lackschicht 7 dient vorwiegend als Haftvermittler zwischen der Reflexionsschicht 6 und der Kleberschicht 8. Auf sie kann gegebenenfalls verzichtet werden.

Die Fig. 2 zeigt in der Draufsicht ein Dokument 13 mit einem als Sicherheitsmerkmal dienenden Informationsträger 2. Das Dokument kann z.B. eine Banknote, ein Pass, ein Ausweis, eine Kreditkarte, eine Wertkarte, ein Wertpapier, etc. sein. Der Informationsträger 2 wurde in einem Transferprozess auf das Dokument 13 aufgeklebt, wobei die Trägerfolie 3 des Schichtverbundes 1 (Fig. 1) nach dem Aufkleben entfernt wurde. Der Informationsträger 2 enthält drei nebeneinander angeordnete Teilflächen 14, 15 und 16 gleicher Grösse, die je eine als Gitter mit einer asymmetrischen Profilform ausgebildete Beugungsstruktur 9 (Fig. 1) enthalten. Dieses nebeneinander Anordnen von Teilflächen nennt man auch Juxtaposition. Die drei Gitter weisen die gleiche Profilform und Profilhöhe h (Fig. 1), jedoch bezüglich einer Referenzrichtung unterschiedliche Winkel-

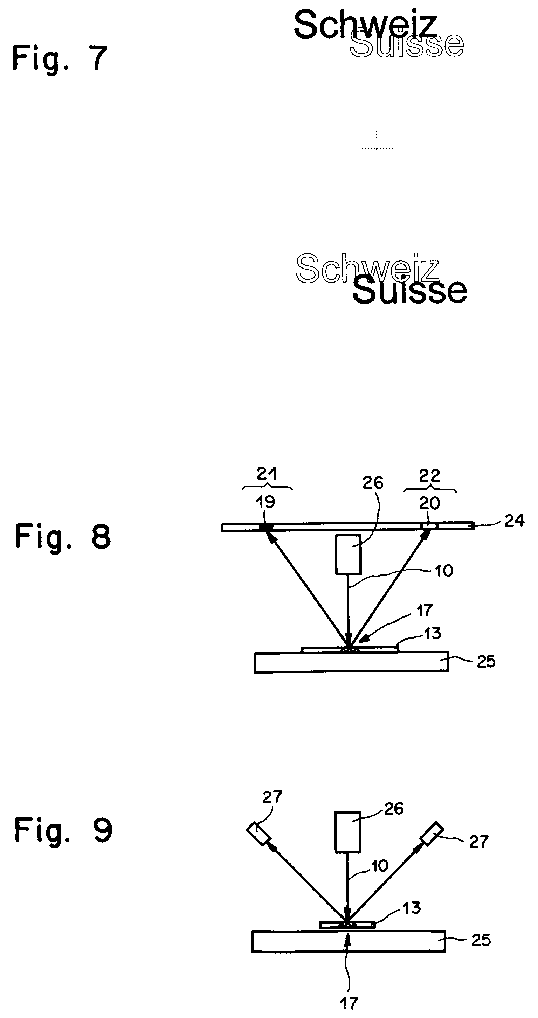

orientierungen $\varphi_1$, $\varphi_2$ und $\varphi_3$ auf, die z.B. -10°, -180° und +10° betragen. Die gitterförmigen Beugungsstrukturen 9 der drei Teilflächen 14, 15 und 16 bilden ein Beugungsmuster 17. Bei Beleuchtung des Beugungsmusters 17 unter senkrechter Einfallsrichtung mit dem Laserstrahl 10 (Fig. 1), d.h. mit einem kohärenten Lichtstrahl, entstehen infolge der Beugung an den Gittern der drei Teilflächen 14, 15 und 16 in Anzahl und Richtung wohldefinierte Teilstrahlen mit unterschiedlichen Intensitäten. Die Intensität der Teilstrahlen kann auf einfache Weise auf einem in einer parallel zur Ebene des Informationsträgers 2 angeordneten Schirm als ein Muster von Bildpunkten unterschiedlicher Helligkeit sichtbar gemacht werden, falls die Wellenlänge $\lambda$ des Laserstrahles 10 im sichtbaren Bereich des elektromagnetischen Spektrums liegt (siehe Fig. 8).

Die Abmessungen des Beugungsmusters 17 sind kleiner als der effektive Durchmesser des Laserstrahles 10 von beispielsweise 1.0 Millimeter gewählt. Sie betragen typisch 0.2 Millimeter. Das Beugungsmuster 17 ist somit von Auge aus einer normalen Sehdistanz von wenigstens 30 cm bei normalen, d.h. inkohärenten Beleuchtungsverhältnissen allenfalls als Punkt, oder überhaupt nicht, wahrnehmbar. Auch die innere Struktur des Beugungsmusters 17 ist von Auge nicht auflösbar und bleibt dem unbewaffneten Auge verborgen. Das Dokument 13 enthält vorzugsweise mehrere gleiche Beugungsmuster 17, die mehr oder weniger weit so auseinanderliegen, dass sich immer wenigstens eines im Leuchtfleck des Laserstrahles 10 befindet.

Das vom Beugungsmuster 17 auf dem Schirm erzeugte Muster 18a ist in der Fig. 3a dargestellt. Das Muster 18a besteht aus drei lichtstarken und drei vergleichsweise lichtschwachen Bildpunkten 19 bzw. 20, die von den sechs Teilstrahlen der ersten Beugungsordnung erzeugt werden. Ein lichtstarker Bildpunkt 19 ist in der zeichnerischen Darstellung als berandeter, mit weisser Farbe ausgefüllter Kreis und ein lichtschwacher Bildpunkt 20 als schwarz ausgefüllter Kreis dargestellt. Diese Darstellung von lichtstarken und lichtschwachen Flächen wird auch für die nächsten Figuren beibehalten. Da die Teilflächen 14, 15 und 16 (Fig. 2) eine gleich grosse Fläche belegen und da ihre Gitter in der oben beschriebenen Weise orientiert sind, ist die Helligkeit der drei Bildpunkte 19 gleich gross und ist die Helligkeit der drei Bildpunkte 20 gleich gross: Das Muster 18a ist bezüglich der auf das Beugungsmuster 17 senkrechten Einfallsrichtung des Laserstrahles 10 in der Weise symmetrisch, dass einem lichtstarken Bildpunkt 19 ein punktsymmetrisch angeordneter, lichtschwacher Bildpunkt 20 zugeordnet ist. Die geometrische Form der Teilflächen 14, 15 und 16 sowie ihre gegenseitige Anordnung üben keinen wesentlichen Einfluss auf das Muster 18a aus, sofern der Gitterlinienabstand d jeweils genügend klein gegen die Abmessungen der entsprechenden Teilfläche 14, 15 bzw. 16 ist. Ob auf dem Schirm auch die höheren Beugungsordnungen zugeordneten Teilstrahlen der Gitter als Bildpunkte wahrnehmbar sind, hängt von verschiedenen Voraussetzungen ab. Zum einen bestimmen der Gitterlinienabstand d und die Wellenlänge $\lambda$ des Laserstrahles, welche Beugungsordnungen auftreten. Zum anderen bestimmen die Abmessungen und die Form des Schirmes sowie dessen Abstand zum Informationsträger 2 sowie allenfalls angeordnete Blendenelemente, welche Teilstrahlen auf dem Schirm auftreten. Weiter hängt die Intensität eines Teilstrahles von der Profilform und der Profilhöhe h (Fig. 1) des Gitters ab.

Die Fig. 3b zeigt die bei kohärenter Beleuchtung auf dem Schirm erzeugte Helligkeitsverteilung eines Beugungsmusters 17 (Fig. 2), das neun gleichgrosse Teilflächen mit sägezahnförmigen Gittern enthält, deren Parameter Linienabstand d mit $d_1$, $d_2$ und $d_3$ sowie Winkelorientierung $\varphi$ mit $\varphi_1$, $\varphi_2$ und $\varphi_3$ je drei verschiedene Werte annehmen.

Vom Standpunkt des Betrachters aus gesehen, ist das auf dem Schirm erzeugte Muster 18b der Fig. 3b, in Anlehnung an die Fourierholografie, als zwei Bilder 21, 22 eines zweidimensionalen Objektes wahrnehmbar, wobei lichtstarken Bildpunkten 19 des ersten Bildes 21 lichtschwache Bildpunkte 20 des zweiten Bildes 22 und umgekehrt entsprechen. Bei senkrechtem Einfall des Laserstrahles 10 auf die das Beugungsmuster 17 enthaltende Ebene sind die Bilder 21, 22 punktsymmetrisch bezüglich der mit einem gestrichelten Kreuz markierten Einfallsachse des Laserstrahles 10. Bei schrägem Einfall des Laserstrahles 10 auf das Beugungsmuster 17 sind die Bilder 21, 22 nur noch näherungsweise symmetrisch bezüglich der Strahlachse. Die Symmetrie der relativen Helligkeit der beiden Bilder 21, 22 bleibt jedoch erhalten. Die Winkel $\varphi$ der zum Beugungsmuster 17 gehörenden Gitter sind vorzugsweise so gewählt, dass die Gesamtheit der erzeugten Teilstrahlen 11, 12 (Fig. 1) in zwei Bündel räumlich getrennter Richtungen zerfällt, so dass das Muster 18b eindeutig als zwei nicht überlappende Bilder 21, 22 wahrnehmbar ist.

Die Kombination mehrerer Teilflächen 14, 15, 16, usw. mit unterschiedlichen Gitterstrukturen zu einem Beugungsmuster 17, wobei die Teilflächen 14, 15, ... nebeneinander angeordnet sind, führt zu einer räumlichen Modulation der Teilstrahlen 11, 12, die den einzelnen Gitterstrukturen zugeordnet sind. Die auf dem Schirm erzeugten Bildpunkte 19, 20 weisen deshalb eine Intensitätsverteilung auf, die in etwa der Fouriertransformation der Anordnung der Teilflächen 14, 15, ... entspricht. Ob diese Intensitätsverteilung wahrnehmbar ist, hängt von den geometrischen Abmessungen der Teilflächen 14, 15, ... im Vergleich zum Gitterlinienabstand d ab.

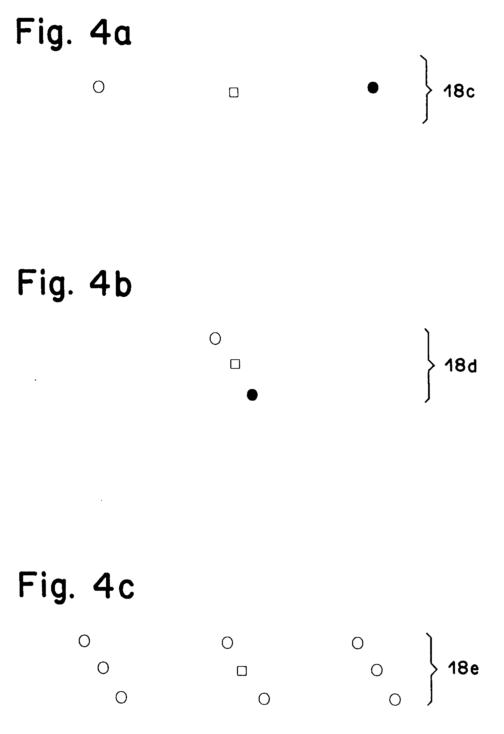

Die Fig. 4a zeigt das bei Beleuchtung mit einem senkrecht auftreffenden Laserstrahl auf einem Schirm erzeugte Muster 18c eines ersten sägezahnförmigen Beugungsgitters mit Linienabstand $d_1$ und Winkelorientierung $\varphi_1$. Der quadratisch gezeichnete Bildpunkt entspricht einem der nullten Beugungsordnung entsprechenden Leuchtfleck. Die Fig. 4b zeigt das Muster 18d eines zweiten sägezahnförmigen Beugungsgitters mit

Linienabstand $d_2$ und Winkelorientierung $\varphi_2$. Der Linienabstand $d_2$ ist grösser als der Linienabstand $d_1$ gewählt, so dass der Abstand der Bildpunkte des Musters 18d kleiner als der Abstand der Bildpunkte des Musters 18c ist. Die Fig. 4c schliesslich zeigt das Muster 18e eines als Superposition des ersten und des zweiten Beugungsgitters realisierten dritten Beugungsgitters. Das Muster 18e entspricht der Faltung der Beugungscharakteristika des ersten und zweiten Beugungsgitters, d.h. der Muster 18c und 18d. Die verschiedenen Bildpunkte weisen aufgrund der räumlichen Asymmetrie des dritten Beugungsgitters eine unterschiedliche Helligkeit auf, die in der Fig. 4c nicht wiedergegeben ist.

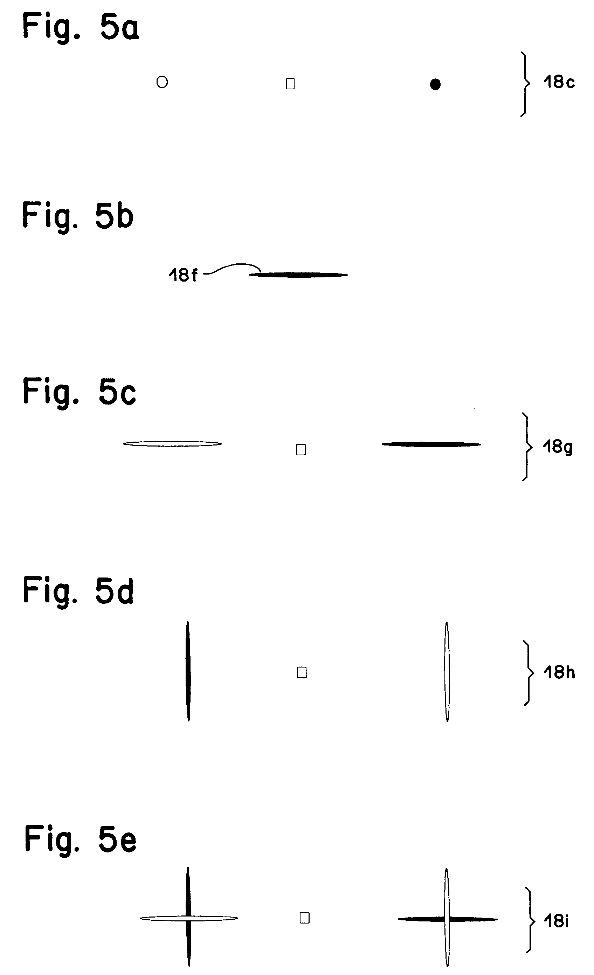

Falls das zweite Beugungsgitter durch eine Beugungsstruktur ersetzt wird, die eine allgemeinere Oberflächentextur aufweist, sind anstelle von Mustern 18c - e mit diskreten Bildpunkten auch Muster mit Strichen und Flächen erzeugbar. Die Fig. 5a zeigt wiederum das bei Beleuchtung mit einem senkrecht auftreffenden Laserstrahl auf einem Schirm erzeugte Muster 18c eines ersten sägezahnförmigen Beugungsgitters mit Linienabstand $d_1$ und Winkelorientierung $\varphi_1$. Die Fig. 5b zeigt das Muster 18f einer zweiten Beugungsstruktur, die als rauhe Oberfläche ausgebildet ist, deren Textur eine Vorzugsrichtung aufweist, und die senkrecht auftreffendes Licht in einen vorbestimmten Raumwinkelbereich diffus streut. Das Muster 18f ist ein strichartiger Leuchtfleck annähernd konstanter Helligkeit. Die Fig. 5c zeigt das Muster 18g einer durch Superposition des ersten Beugungsgitters und der zweiten Beugungsstruktur entstandenen dritten Beugungsstruktur. Durch eine Drehung der das Muster 18f erzeugenden Beugungsstruktur um einen Winkel von 90° und Überlagerung der das Muster 18c erzeugenden Gitterstruktur entsteht eine vierte Beugungsstruktur, die das in der Fig. 5d gezeigte Muster 18h erzeugt. Die Fig. 5e zeigt schliesslich ein Muster 18i, das entsteht, wenn die dritte und die vierte Beugungsstruktur, die die beiden Muster 18g und 18h erzeugen, in Teilflächen 14, 15 (Fig. 2) nebeneinander angeordnet sind. Nebenbei sei hier erwähnt, dass die Muster 18g und 18h auch mit anderen Beugungsgittern erzeugbar sind, deren Linienabstand örtlich variiert bzw. deren Gitterfurchen gekrümmt sind und die eine asymmetrische Profilform haben.

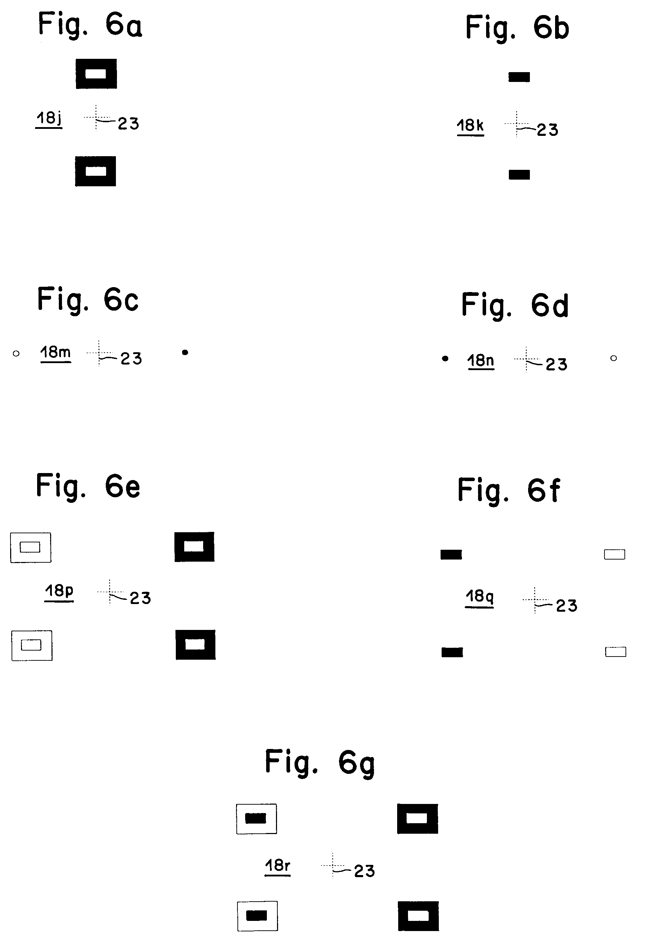

Juxtaposition und Superposition lassen sich beliebig kombinieren, um aus einfachen beugenden Grundstrukturen ein Beugungsmuster zu schaffen, das ein beliebiges Muster erzeugt. Anhand der Muster der Fig. 6a - g ist ein solches Verfahren beschrieben. Die Fig. 6a zeigt das von einer mittels Fourierholografie erhaltenen Beugungsstruktur auf dem Schirm erzeugte Muster 18j sowie ein die Strahlachse definierendes Kreuz 23. Das Muster 18j besteht aus dem direkten und dem konjugierten Bild eines ersten Objektes. Die Fig. 6b zeigt als Muster 18k das direkte und das konjugierte Bild eines zweiten Objektes, das örtlich auf dem Schirm am gleichen Ort wie das erste Objekt vorzufinden ist. Die Fig. 6c und 6d zeigen die Muster 18m bzw. 18n von asymmetrischen Gitterstrukturen, die gegenseitig um 180° verdreht sind. Mittels Superposition der die Muster 18j und 18m bzw. 18k und 18n erzeugenden Beugungsstrukturen entstehen die in den Fig. 6e und 6f gezeigten Muster 18p bzw. 18q. Durch eine Juxtaposition der den Mustern 18p und 18q zugrundeliegenden Beugungsstrukturen lässt sich schliesslich das Muster 18r erzeugen, bei dem die beiden Objekte je zweimal in unterschiedlicher Helligkeit und gegenseitiger Verschachtelung sichtbar sind.

Als Beugungsmuster 17 (Fig. 2) zur Erzeugung eines beliebigen zweidimensionalen Bildes ist insbesondere ein Kinoform geeignet. Das Kinoform in seiner ursprünglichen Form ist ein reines Phasenobjekt, d.h. das Kinoform verändert lokal die Phase des zur Erzeugung des Bildes verwendeten kohärenten Lichtstrahles 10 (Fig. 1). Die Amplitude des Lichtstrahles 10 erfährt jedoch keine Veränderung. Das erzeugte Bild erscheint in Richtung der nullten Beugungsordnung, d.h. das erzeugte Bild und der transmittierte oder reflektierte Lichtstrahl 10 sind räumlich nicht getrennt. Bei einer Modifikation des Kinoform, die 1971 von Kirk & Jones vorgeschlagen wurde, ist auch die Amplitude des Lichtstrahles 10 lokal veränderbar, indem dem Kinoform ein zusätzliches Beugungsgitter mit lokal variabler Profilhöhe überlagert wird. Das zusätzliche Beugungsgitter bewirkt einerseits, dass anstelle eines einzigen Bildes in Richtung der nullten Beugungsordnung weitere, teilweise verzerrte Bilder in positiven und negativen Beugungsordnungen erzeugt werden, wobei die Richtung der Beugungsordnungen durch den Gitterlinienabstand und die Orientierung des zusätzlichen Beugungsgitters sowie die Wellenlänge $\lambda$ des Lichtstrahles 10 bestimmt ist. Andererseits hängt der Beitrag des von jedem Flächenelement des Kinoform in eine bestimmte Beugungsordnung gebeugten Lichtes von der lokalen Profilhöhe des zusätzlichen Beugungsgitters ab, was einer Amplitudenmodulation entspricht. Die Amplitudenmodulation ist aber nur für eine einzige vorbestimmte Beugungsordnung korrekt.

Das Kinoform als Phasenobjekt ist als Oberflächenrelief herstellbar, das sich wegen seiner einfachen Vervielfachung durch Prägen oder Abformen für die billige Massenherstellung eignet. Eine ausführliche Beschreibung des Kinoforms findet sich im Band XVI der Reihe "Progress in Optics", herausgegeben von E. Wolf, North-Holland Publishing Company, (ISBN 0 444 85 087 2).

Das Kinoform stellt ein spezielles Beispiel eines computergenerierten Hologramms (CGH) dar. Einen Überblick über computergenerierte Hologramme gibt der Beitrag von Wai-Hon Lee im oben erwähnten Band XVI der Reihe "Progress in Optics". Anfänglich wurden computergenerierte Hologramme in der Form von Amplitudenhologrammen verwirklicht. Weiterentwicklungen führten dann zum Kinoform, d.h. zum computergenerierten Hologramm in der Form von Oberflächenreliefs.

Zur Herstellung computergenerierter Hologramme sind mehrere Verfahren bekannt. Beispielsweise ist eine Synthese des computergenerierten Hologramms mittels Masken analog zu den in der Halbleitertechnologie verwendeten Verfahren möglich. Ein solches Verfahren ist im Artikel von J.J. Clair und C.I. Ambitol im oben erwähnten Band XVI der Reihe "Progress in Optics" beschrieben. Ein anderes Verfahren bedient sich der Elektronenstrahllithografie, bei dem ein Elektronenstrahl direkt eine Schicht aus Resist beschreibt. Anschliessend erfolgt ein Ätzprozess zur Gewinnung des Oberflächenreliefs, wobei die Ätzrate und somit das Oberflächenrelief durch die lokale Dosis der Elektronenbestrahlung bestimmt ist. Auch das Oberflächenrelief eines Kinoforms, dem eine als Trägerprofil dienende Gitterstruktur überlagert ist, ist mit den Methoden der computergenerierten Hologramme berechen- und herstellbar.

Die Überlagerung eines Beugungsgitters mit einer nicht symmetrischen Profilform, jedoch einer vorbestimmten festen Profilhöhe über das Oberflächenrelief eines Kinoform führt nun bei der Beleuchtung mit kohärentem Licht zur Erzeugung von Bildern in räumlich getrennten Richtungen, wobei diese Bilder unterschiedlich hell sind. Diese Überlagerung entspricht der vorgängig erwähnten Superposition von zwei voneinander unabhängigen Beugungsstrukturen.

Die Fig. 7 zeigt ein von einem Beugungsmuster 17 (Fig. 2) bei kohärenter Beleuchtung auf einem Schirm erzeugtes Bild, das zwei unterschiedliche Schriftzüge enthält. Die Schriftzüge sind zweimal vorhanden, nämlich in lichtstarker wie auch in lichtschwacher Schrift der gleichen Farbe. Die lichtstarken Schriftzüge sind in Fettschrift, die lichtschwachen Schriftzüge in umrandeter Schrift dargestellt. Der erste Schriftzug besteht aus dem Wort "Schweiz", der zweite Schriftzug aus dem Wort "Suisse". Der lichtstarke und der lichtschwache Schriftzug "Schweiz" weisen die gleiche Orientierung auf. Die relative Anordnung des Schriftzuges "Suisse" zum Schriftzug "Schweiz" ist frei wählbar. Die Schriftzüge können z.B. gegeneinander verdreht sein. Mit Vorteil sind das lichtstarke Bild des ersten Schriftzuges und das lichtschwache Bild des zweiten Schriftzuges einander wenigstens teilweise überlagert. Bei bestimmten Technologien sind dann automatisch auch das lichtstarke Bild des zweiten Schriftzuges und das lichtschwache Bild des ersten Schriftzuges einander überlagert. Vom Standpunkt des Betrachters aus gesehen, erscheinen auf dem Schirm je zwei Abbilder von zwei verschiedenen Objekten, nämlich in zwei räumlich getrennten Richtungen je ein lichtstarkes und ein lichtschwaches. Bei einem Intensitätsverhältnis von beispielsweise 10:1 zwischen den lichtstarken und den lichtschwachen Schriftzügen werden die lichtstarken Schriftzüge als dominant wahrgenommen. Die lichtschwachen Schriftzüge hingegen werden erst bei genauerem Hinsehen erkannt. Das Beugungsmuster 17 zur Erzeugung der Schriftzüge "Schweiz" und "Suisse" besteht beispielsweise aus zwei in Teilflächen 14, 15 nebeneinander angeordneten Beugungsstrukturen 9, die beide wie vorgängig beschrieben als Kinoform mit einer als Trägerprofil dienenden, überlagerten, asymmetrischen Gitterstruktur realisiert sind.

Das bei kohärenter Beleuchtung aufdem Schirm 24 erzielbare Auflösungsvermögen der Schriftzüge "Schweiz" und "Suisse", d.h. allgemein der Bilder 21, 22, nimmt mit zunehmender Grösse des Beugungsmusters 17 zu. Falls die vom Beugungsmuster 17 beanspruchte Fläche mehrere Zehntel Quadratmillimeter gross ist, könnte es sein, dass die vom Beugungsmuster 17 beanspruchte Fläche auf dem Informationsträger 2 unter normalen Beleuchtungsverhältnissen wegen des überlagerten Trägerprofils zu wahrnehmbaren, wechselnden Beugungseffekten führt. Die im Kinoform steckende Information bleibt jedoch verborgen.

Bei der holografischen Herstellung einer Kopie des entsprechenden Beugungsmusters nach dem Kontaktverfahren geht die in der asymmetrischen Profilform steckende Information verloren, so dass bei Beleuchtung mit kohärentem Licht sowohl der Schriftzug "Schweiz" als auch der Schriftzug "Suisse" als direktes Bild und als konjugiertes Bild in etwa gleicher Helligkeit erzeugt werden. Wegen der Überlagerung der beiden Schriftzüge sind sie dann auf dem Schirm nur als mehr oder weniger unleserliche Helligkeitsflecken sichtbar, weshalb eine Kopie auf einfache Weise vom Original unterscheidbar ist. Bei einem weiteren holografischen Kopierverfahren erscheint bei der Kopie dasselbe Bild mit gleicher Helligkeitsverteilung auf beiden Seiten des beleuchtenden Strahles, so dass auch in diesem Fall die Kopie einfach vom Original unterscheidbar ist.

Mit einfachen Beugungsstrukturen 9, z.B. mit Gittern, entsteht bei der Beleuchtung mit einem kohärenten Lichtstrahl eine endliche Anzahl von diskreten Teilstrahlen 11, 12, die als Muster mit diskreten, getrennten Bildpunkten 19, 20 sichtbar gemacht werden können. Mit Beugungsstrukturen 9, die eine kompliziertere Oberflächentextur aufweisen, z.B. mit einem Kinoform, entsteht bei der Beleuchtung mit kohärentem Licht eine räumlich kontinuierliche Lichtverteilung, die als Muster mit kontinuierlicher Helligkeitsverteilung sichtbar gemacht werden kann.

Die vom Beugungsmuster 17 oder von einem Ensemble von räumlich getrennten, jedoch gleichen Beugungsmustern 17, die gleichzeitig beleuchtet werden, erzeugten Helligkeitsverteilungen zeichnen sich durch eine grosse Tiefenschärfe aus: das auf einem Schirm sichtbar gemachte Muster 18 ist über einen grossen Abstandsbereich zwischen dem Informationsträger 2 und dem Schirm ziemlich scharf.

Diese Eigenschaft ergibt sich dank der kleinen vom Laserstrahl 10 beleuchteten Fläche, die typischerweise weniger als zwei bis drei $mm^2$ beträgt. Einzig die Grösse des Musters 18 nimmt mit zunehmendem Abstand zwischen dem Informationsträger 2 und dem Schirm zu.

Die Qualität der bei der Beleuchtung mit kohärentem Licht erzeugten Muster 18 (Fig. 3 - 7) oder Bilder eines Informationsträgers 2 (Fig. 2) hängt nicht nur von der Qualität des Beugungsmusters 17 ab, sondern auch von der Beschaffenheit der Oberfläche des Dokumentes 13, auf das der Informationsträger 2 aufgebracht wurde. Bei planer Oberfläche können die Beugungsstrukturen 9 lokal sehr fein strukturiert sein zur Erzeugung eines mit vielen Details versehenen Bildes. Bei rauher Oberfläche, der sich der die Beugungsstrukturen 9 enthaltende Informationsträger 2 formschlüssig anpasst, geht die an sich lokal vorbestimmte Winkelbeziehung zwischen dem beleuchtenden Lichtstrahl 10 und der Kontur der Beugungsstrukturen 9 mehr oder weniger verloren. Dies hat zur Folge, dass anstelle eines monochromatischen Bildes mit feiner Helligkeitsverteilung ein unscharfes und/oder verschmiertes Bild erzeugt wird, bei dem die Feinheiten verloren gegangen sind. Bei der Verwendung des Informationsträgers 2 als Sicherheitselement auf einem Dokument 13 mit einer rauhen Oberfläche, wie z.B. einer Banknote, ist es deshalb bevorzugt, ein Beugungsmuster 17 mit Beugungsstrukturen 9 vorzusehen, das den auftreffenden Lichtstrahl 10 in eine begrenzte Anzahl von diskreten, räumlich deutlich getrennten Teilstrahlen beugt, die als getrennte Bildpunkte 19, 20 sichtbar gemacht oder photoelektrisch analysiert werden können. Geeignet ist z.B. das in der Fig. 2 gezeigte Beugungsmuster 17, das das in der Fig. 3a dargestellte Muster 18a mit nur sechs Bildpunkten 19, 20 erzeugt, sofern die Differenz der Winkelorientierungen $\varphi_1$ bis d $\varphi_3$ genügend gross ist. Wegen der Rauhigkeit der Oberfläche des Dokumentes 13 erfahren die Teilstrahlen dann eine mehr oder weniger starke Verbreiterung in Lichtbündel, d.h. sie können eine beträchtliche Divergenz aufweisen. Die Divergenz der einzelnen Teilstrahlen variiert lokal und ist somit eine statistisch verteilte Grösse. Die Intensitätsrelationen verschiedener Teilstrahlen bleiben jedoch auch unter den Lichtbündeln erhalten und können erkannt werden, falls die räumliche Trennung zwischen den Teilstrahlen grösser als die Divergenz der einzelnen Teilstrahlen ist. Weist der Lichtstrahl 10 zudem einen Durchmesser auf, der wesentlich grösser als die Dimensionen eines einzelnen Beugungsmusters 17 ist und ist ein ganzes Ensemble von Beugungsmustern 17 beleuchtet, dann ist die Divergenz der Teilstrahlen kaum mehr eine Funktion des Ortes der beleuchteten Fläche, d.h. Richtung und Ausdehnung der Lichtbündel sind annähernd konstant. Auf einem Schirm oder mit Photodetektoren, deren Lage und lichtempfindliche Fläche auf die maximale Divergenz der Lichtbündel abgestimmt ist, lassen sich die Intensitätsrelationen somit immer noch von Auge bzw. maschinell bestimmen und die Echtheit des Dokumentes 13 verifizieren.

Die Fig. 8 zeigt eine Einrichtung, um die im Informationsträger 2 (Fig. 2) in der Form eines Beugungsmusters 17 gespeicherte Information auf einem Schirm 24 als zwei Bilder 21, 22 sichtbar zu machen. Die Einrichtung weist eine Bühne 25 zur Aufnahme des mit dem Informationsträger 2 versehenen Dokumentes 13 und einen als kohärente Lichtquelle dienenden Laser 26 auf, dessen Strahl 10 in senkrechter Einfallsrichtung auf wenigstens eine Teilfläche des Informationsträgers 2 auftrifft. Zur Sichtbarmachung des vom Beugungsmuster 17 des Informationsträgers 2 reflektierten und gebeugten Lichtes ist der Schirm 24 aus einem milchig trüben Glas gefertigt, das auftreffendes Licht diffus streut, so dass die vom Beugungsmuster 17 erzeugten Bilder 21, 22 von einem Beobachtungspunkt ausserhalb der Einrichtung betrachtbar ist. Die Gefahr, dass Laserlicht direkt in die Augen eines Betrachters fallen könnte, besteht somit nicht. Form und Abmessungen des Schirms 24 sind weiter so vorbestimmt, dass alle relevanten Teile des erzeugten Bildes sichtbar sind. Es kann auch eine Laserdiode verwendet werden, deren Wellenlänge $\lambda$ z.B. 670 Nanometer beträgt und somit im roten Bereich liegt, so dass eine handelsübliche, billige Laserdiode eingesetzt werden kann. Einem lichtstarken Bildpunkt 19 des einen Bildes 21, 22 ist ein lichtschwacher Bildpunkt 20 des anderen Bildes 22 bzw. 21 zugeordnet, wobei die Bilder 21, 22 punktsymmetrisch oder nicht punktsymmetrisch sein können.

Mit Vorteil ist das Beugungsmuster 17 mehrfach auf dem Informationsträger 2 vorhanden und weist der Laserstrahl 10 einen derart grossen Durchmesser auf, dass immer wenigstens ein Beugungsmuster 17 beleuchtet ist. Die Helligkeitsverteilung des auf dem Schirm 24 sichtbaren Bildes ist somit unabhängig von der Lage des Informationsträgers 2 auf der Bühne 25.

In der Fig. 9 ist eine Einrichtung zur maschinellen Überprüfung von im Informationsträger 2 versteckt gespeicherter Information dargestellt. Sie unterscheidet sich von der vorgängig beschriebenen Einrichtung im wesentlichen dadurch, dass anstelle des Schirms 24 Photodetektoren 27 oder wenigstens ein ein- oder zweidimensionales Array mit Photodetektoren vorhanden sind. Das Beugungsmuster 17 und die geometrische Anordnung der Photodetektoren 27 sind so aufeinander abgestimmt, dass vom Beugungsmuster 17 ausgehende Teilstrahlen oder Bildbereiche auf die Photodetektoren 27 fallen, so dass die Intensität ausgewählter Teilstrahlen bestimmbar ist. Die Einrichtung ist weiter eingerichtet, aus den gemessenen Intensitäten, und insbesondere deren Verhältnissen, ein Informationssignal zu bilden, ob der Informationsträger 2 als echt zu betrachten ist.

Das Beugungsmuster 17 stellt ein unsichtbares Sicherheitselement dar, das versteckte Information enthält, die erst bei Beleuchtung mit kohärentem Licht sichtbar wird.

Die vorgängig beschriebene Superposition einer beliebigen Beugungsstruktur, die bei Beleuchtung mit kohärentem Licht auf einem Schirm ein Bild eines Objektes erzeugt, und eines Beugungsgitters mit einer sägezahnförmigen Profilform, d.h. allgemein einer asymmetrischen Beugungsstruktur, kann man auch ansehen als Modulation der Profilform der beliebigen Beugungsstruktur mit einem räumlich asymmetrischen Trägerprofil. Als Resultat erhält man eine Beugungsstruktur, die bei Beleuchtung mit kohärentem Licht entsprechend der Art des Trägerprofils wenigstens zwei geometrisch gleiche Bilder des gleichen Objektes erzeugt, die räumlich getrennt und unterschiedlich lichtstark sind. Dabei ist eine Symmetrie in der Form einer Kontrastumkehr vorhanden, indem einem lichtstarken Punkt des ersten Bildes ein relativ lichtschwacher Punkt des zweiten Bildes zugeordnet ist. Diese Kontrastumkehr stellt ein einfach verifizierbares Sicherheitsmerkmal dar. Sofern das Trägerprofil örtlich variiert und dabei in bestimmten Flächen eine symmetrische Profilform aufweist, können Teile des ersten Bildes und des zweiten Bildes anstelle unterschiedlicher Helligkeiten auch gleiche Helligkeiten aufweisen. Weiter können die Bildpunkte 19, 20 je nach Ausgestaltung des Beugungsmusters 17 nur zwei Helligkeitsstufen, lichtstark und lichtschwach bzw. hell und dunkel, oder mehrere Helligkeitsstufen aufweisen. Die Symmetrie der Kontrastumkehr bedeutet dann, dass dem lichtstärksten Bildpunkt der lichtschwächste Bildpunkt, dem zweit lichtstärksten Bildpunkt der zweit lichtschwächste Bildpunkt, etc. zugeordnet ist.

Beugungsmuster 17, die versteckte Informationen enthalten, können auf dem Informationsträger 2 auf vielfältige Weise mit weiteren Beugungsstrukturen 9 kombiniert werden, deren geometrische Parameter Linienabstand, Orientierung und Profilform örtlich in einer vorbestimmten Art und Weise derart variieren, dass sie bei Betrachtung und Bewegung des Informationsträgers 2 unter normalen Beleuchtungsverhältnissen auffällige wechselnde beugungsoptische Effekte hervorbringen, wie z.B. unterschiedliche Farbeffekte oder Wechsel zwischen hell und dunkel. Ein weiterer optischer Effekt kann darin bestehen, dass benachbarte Flächenelemente in unterschiedlicher Helligkeit oder unterschiedlicher Farbe sichtbar sind, wobei beim Drehen oder Kippen des Informationsträgers 2 die relative Helligkeit oder Farbe der Flächenelemente ändert. Die Beugungsstrukturen 9 können insbesondere die wechselnden optischen Effekte erzeugen, wie sie von Hologrammen oder von Optical Variable Devices, wie sie beispielsweise in der europäischen Patentschrift EP 375 833 beschrieben sind, bekannt sind. Die optischen Effekte der Beugungsstrukturen 9 stellen ein visuell einfach überprüfbares Merkmal dar. Aus der europäischen Patentschrift EP 105 099 sind beugungsoptische Sicherheitselemente bekannt, bei denen in der Regel nur ein Bruchteil der vom Sicherheitselement eingenommenen Fläche mit Beugungsstrukturen 9 versehen ist. Der Rest der Fläche ist beugungsoptisch nicht aktiv und kann für einen menschlichen Betrachter insbesondere wie ein Spiegel wirken. Dieser für sichtbare Effekte nicht genutzte Flächenanteil eignet sich zur Aufnahme einer Mehrzahl von Beugungsmustern zur Speicherung versteckter Information. Diese Beugungsmuster können alle identisch ausgebildet sein und die gleiche Information darstellen oder sie können nach einem vorgegebenen Plan von Beugungsmuster zu Beugungsmuster ändernde Information enthalten. Eine weitere Möglichkeit der Kombination besteht darin, in der in der europäischen Patentschrift EP 335 833 beschriebenen Art ein beugungsoptisches Sicherheitselement in Rasterfelder zu unterteilen. Jedes Rasterfeld ist weiter unterteilt in wenigstens zwei Feldanteile. Pro Rasterfeld ist der erste Feldanteil mit einem Beugungsmuster zur Speicherung versteckter Information belegt, die anderen Feldanteile enthalten beliebige Beugungsmuster zur Beugung inkohärenten, sichtbaren Lichtes. Die zweiten, die dritten, usw. Feldanteile stellen beispielsweise je ein Bild dar, das unter einem anderen Betrachtungswinkel erscheint.

Gemäss einer weiteren Ausführung kann ein solches Beugungsmuster sowohl Informationen enthalten, die erst bei Beleuchtung mit kohärentem Licht erkennbar werden, als auch unter normalen Beleuchtungsverhältnissen wechselnde optische Effekte der vorgängig genannten Art erzeugen.

Die Linienabstände d und Profilhöhen h der beiden überlagerten Beugungsstrukturen können von unterschiedlicher oder vergleichbarer Grösse sein. Die Reflexionsschicht 6 und die zweite Lackschicht 7 können auch eine einzige Schicht mit einem von der Lackschicht 5 deutlich unterschiedlichen Brechungsindex sein, so dass der Schichtverbund 1 gegebenenfalls über grosse Teile des sichtbaren Bereichs des elektromagnetischen Spektrums annähernd durchsichtig ist.

**Patentansprüche**

1.  Informationsträger (2) mit wenigstens einem Beugungsmuster (17), das aus mikroskopisch feinen Reliefstrukturen ausgebildete Beugungsstrukturen (9) aufweist und das bei Beleuchtung mit kohärentem Licht (10) in zwei räumlich getrennten Richtungen ein erstes und ein zweites Bild (21, 22) eines Objektes erzeugt, wobei die Bilder (21, 22) auf einem Schirm (24) sichtbar gemacht oder mittels Photodetektoren (27) analysiert werden können, **dadurch gekennzeichnet, dass** das Beugungsmuster (17) solcher Art ist, dass die beiden Bilder (21, 22) lichtstarke und/oder vergleichsweise lichtschwache Bildpunkte (19, 20) aufweisen und dass einem lichtstarken Bildpunkt (19) des ersten Bildes (21) ein lichtschwacher Bildpunkt (20) des zweiten Bildes (22) und umgekehrt zugeordnet werden kann.

2.  Informationsträger (2) nach Anspruch 1, **dadurch gekennzeichnet, dass** das erste Bild (21) vorwiegend lichtstarke Bildpunkte (19) und das zweite Bild (22) vorwiegend lichtschwache Bildpunkte (20) aufweist.

3.  Informationsträger (2) nach Anspruch 1 oder 2, **dadurch gekennzeichnet, dass** bei kohärenter Beleuchtung des Beugungsmusters (17) unter senkrechter Einfallsrichtung die beiden Bilder (21, 22) punktsymmetrisch bezüglich der Einfallsrichtung sind.

4.  Informationsträger (2) nach einem der Ansprüche 1 bis 3, **dadurch gekennzeichnet, dass** das erste Bild (21) ein lichtstarkes Abbild eines ersten Objektes und ein lichtschwaches Abbild eines zweiten Objektes enthält, dass die beiden Abbilder einander wenigstens teilweise überlappen, dass das zweite Bild (22) ein lichtschwaches Abbild des ersten Objektes und ein lichtstarkes Abbild des zweiten Objektes enthält und dass diese Abbilder ebenfalls wenigstens teilweise überlappen.

5.  Informationsträger (2) nach einem der Ansprüche 1 bis 4, **dadurch gekennzeichnet, dass** das Beugungsmuster (17) durch Superposition oder Juxtaposition von wenigstens zwei verschiedenen Beugungsstrukturen (9) gebildet ist.

6.  Informationsträger (2) nach einem der Ansprüche 1 bis 5, **dadurch gekennzeichnet, dass** das Beugungsmuster (17) als Superposition eines Fourierhologramms oder eines Kinoforms und einer als Trägerprofil dienenden Beugungsstruktur (9) mit einer asymmetrischen Profilform gebildet ist.

7.  Informationsträger (2) nach Anspruch 1, **dadurch gekennzeichnet, dass** das Beugungsmuster (17) aus einfachen Beugungsstrukturen (9) gebildet ist, so dass bei Beleuchtung mit kohärentem Licht nur eine begrenzte Anzahl von reflektierten und gebeugten Teilstrahlen (11, 12) erzeugt wird und dass die räumliche Trennung der Teilstrahlen (11, 12) grösser als die maximale Divergenz der Teilstrahlen (11, 12) ist.

8.  Informationsträger (2) nach einem der Ansprüche 1 bis 7, **dadurch gekennzeichnet, dass** der Informationsträger (2) weitere Beugungsstrukturen enthält, die unter normalen Beleuchtungsverhältnissen beim Drehen oder Kippen des Informationsträgers (2) wechselnde optische Effekte erzeugen.

9.  Einrichtung zur manuellen und/oder maschinellen Verifizierung der Echtheit eines Informationsträgers (2) nach einem der Ansprüche 1 bis 8, mit einer kohärentes Licht aussendenden Lichtquelle (26), mit einer Bühne (25) zur Aufnahme des Informationsträgers (2) oder eines mit dem Informationsträger (2) versehenen Dokumentes (13) und mit einem Betrachtungsschirm (24) und/oder Photodetektoren (27), **dadurch gekennzeichnet, dass** auf dem Betrachtungsschirm (24) beide vom Informationsträger (2) erzeugten Bilder gleichzeitig sichtbar sind bzw. dass die Photodetektoren (27) zur Messung und Analyse der Intensitäten eines Teils der vom Informationsträger (2) gebeugten Teilstrahlen (11, 12) eingerichtet sind.

**Fig.1**

**Fig.2**

**Fig.3a**

**Fig.3b**

EP 0 762 238 A1

# Fig. 4a

○　　　□　　　● } 18c

# Fig. 4b

○
□ } 18d
●

# Fig. 4c

○　　　○　　　○
○　　□　　　○ } 18e
○　　　○　　　○

11

# Fig. 5a

18c

# Fig. 5b

18f

# Fig. 5c

18g

# Fig. 5d

18h

# Fig. 5e

18i

# Fig. 6a

18j —— 23

# Fig. 6b

18k —— 23

# Fig. 6c

o    18m —— 23    •

# Fig. 6d

•    18n —— 23    o

# Fig. 6e

18p —— 23

# Fig. 6f

18q —— 23

# Fig. 6g

18r —— 23

## Fig. 7

Schweiz
Suisse

Schweiz
Suisse

## Fig. 8

## Fig. 9

Europäisches
Patentamt

**EUROPÄISCHER RECHERCHENBERICHT**

Nummer der Anmeldung

EP 96 10 7332

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 360 969 (LANDIS & GYR BETRIEBS AG) 4.April 1990 * Spalte 2, Zeile 5 - Spalte 4, Zeile 45; Abbildungen * --- | 1,3,5,8 | G03H1/04 G03H1/02 B42D15/10 G06K19/16 |
| A | WO-A-93 24333 (DE LA RUE HOLOGRAPHICS LTD ;DRINKWATER KENNETH JOHN (GB); HOLMES B) 9.Dezember 1993 * Ansprüche * --- | 1 | |
| D,A | DE-A-42 37 415 (SHOEI PRINTING CO LTD ;AMC CO (JP)) 13.Mai 1993 * Spalte 5, Zeile 46 - Spalte 6, Zeile 39 * * Spalte 4, Zeile 13 - Zeile 67 * ----- | 1,9 | |

| | RECHERCHIERTE SACHGEBIETE (Int.Cl.6) |
|---|---|
| | G03H |

Der vorliegende Recherchenbericht wurde für alle Patentansprüche erstellt

| Recherchenort | Abschlußdatum der Recherche | Prüfer |
|---|---|---|
| DEN HAAG | 21.November 1996 | Krametz, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P04C03)